(19) Europäisches Patentamt
European Patent Office
Office européen des brevets

(11) Publication number: **0 386 297 A1**

(12) # EUROPEAN PATENT APPLICATION

(21) Application number: **89104233.5**

(22) Date of filing: **10.03.89**

(51) Int. Cl.$^5$: **C09D 133/04, C08J 7/04, C08J 7/18**

(43) Date of publication of application:
**12.09.90 Bulletin 90/37**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Moore, James Eugene**
**901 Lower New Harmony Road**
**Mt. Vernon Indiana 47620(US)**

(74) Representative: **Catherine, Alain**
**General Electric France Service de Propriété Industrielle 18 Rue Horace Vernet**
**F-92136 Issy-Les-Moulineaux Cedex(FR)**

(54) **Uv curable thermoformable protective coatings.**

(57) The present invention provides a coating composition for thermoplastic substrates, which is UV-curable and which produces thermoformable coatings. the coating contains a difunctional acrylic monomer, a monofunctional acrylic monomer, and a polymerization initiating amount of a photoinitiator. The difunctional acrylic monomer is a high molecular weight diacrylate in which the acrylate groups are separated by relatively large, flexible organic groups. The concentrations of the difunctional acrylic monomer and the monofunctional acrylic monomer are controlled to achieve a cross-link density in the cured coating which results in a hard, abrasion resistant coating, yet one which is thermoformable.

EP 0 386 297 A1

# UV CURABLE THERMOFORMABLE PROTECTIVE COATINGS

## Background of the Invention

This invention relates to UV-curable thermoformable protective coatings. More particularly, the invention concerns thermoplastic acrylate-based coating compositions for thermoplastic substrates, such as sheets and film.

Thermoplastics, such as polycarbonates, polyesters, polyvinyls, and the like are commercially important materials which are useful in a wide range of applications, from non-opaque impact resistant sheets to shaped articles. Many of these materials have rather low scratch resistance, are susceptible to attack by many common solvents and chemicals, and are subject to microcracking with aging and exposure, particularly exposure to ultraviolet light.

One process that has been used to overcome low scratch resistance and susceptibility to attack by solvents is the application of a durable coating to the plastic substrate. Typically, these coatings have been UV-curable, acrylate-based coatings.

Previous attempts to produce hard, abrasion and chemical resistant coatings have generally employed highly functionalized acrylic monomers. The resulting cured coatings were highly crosslinked. Moore, et al., U.S. Patent No. 4,198,465 describe a polycarbonate article coated with a durably adherent mar, abrasion and chemical resistant UV-cured coating. The coating is comprised of the photoreaction products of polyfunctional acrylate monomers and resorcinol monobenzoate.

Although highly crosslinked coatings are quite hard and resist scratching and abrasion they are substantially thermoset in nature. The thermoset nature of the coatings can be a disadvantage if there is a desire to thermoform the resulting thermoplastic. Attempts to thermoform sheets coated with highly crosslinked resins have often resulted in rupture or separation of the coating, because the coating lacks the requisite elongation characteristics.

A need exists for a UV-cured acrylic coating which possesses good abrasion and chemical resistance, yet is flexible and thermoformable.

## Summary of the Invention

The present invention provides a coating composition for thermoplastic substrates, which is UV-curable and which produces thermoformable coatings, comprising: a difunctional acrylic monomer, a monofunctional acrylic monomer, and a polymerization-initiating amount of a photoinitiator. The difunctional acrylic monomer is characterized by a relatively long, flexible organic group separating the two acrylate groups. The monofunctional acrylic monomer is used to reduce the overall crosslink density of the cured coating. By controlling the types of monomers employed, and their relative concentrations, as hereinafter described, a tough, thermoformable coating having good abrasion and chemical resistance can be produced.

## Detailed Description of the Invention

The crosslink density and thermoplastic nature of the coatings of this invention are achieved in two ways: by employing relatively high molecular weight difunctional acrylates, wherein the acrylate groups are separated by large, flexible organic gorups, and by employing a monofunctional acrylic monomer to reduce the overall acrylic functionality of the uncured coating composition.

The difunctional acrylic monomers used in the compositions are represented by the general formula

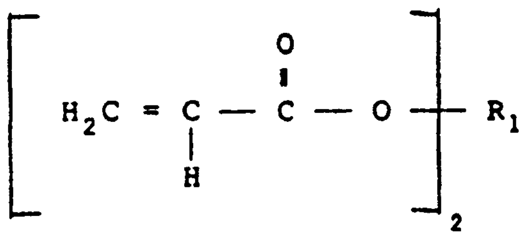

wherein $R_1$ is a divalent radical selected from the group consisting of straight or branched alkylenes containing from 6 to about 30 carbon atoms, provided that, if the alkylene group is branched, at least about 6 carbon atoms are in the chain separating the acrylate groups; poly(lower alkylene ethers), wherein the alkylene groups contain from 2 to about 6 carbon atoms and the overall molecular weight of the poly(lower alkylene ether) ranges from about 100 to about 500; polyesters derived from lower alkylene diols of from 2 to about 10 carbon atoms and lower alkylenedicarboxylic acids of from 2 to about 10 carbon atoms, said polyesters having overall molecular weights from abut 100 to about 500; and monocyclic, polycyclic and heterocyclic saturated ring systems of from 6 to about 30 carbon atoms.

In preferred difunctional acrylates, $R_1$ is a straight or branched alkylene group containing from 10 to about 20 carbon atoms; a poly (lower alkylene ether), wherein the alkylene groups contain from about 4 to about 6 carbon atoms and the molecular weight of the poly (lower alkylene ether) ranges from about 100 to about 300; a polyester derived from lower alkylene diols of from about 4 to about 6 carbon atoms and lower alkylenedicarboxylic acids of from 4 to about 6 carbon atoms, said polyester having a molecular weight of from about 100 to about 300; and monocylic, polycyclic and heterocyclic saturated ring systems containing from about 10 to about 20 carbon atoms.

Any of the above-described $R_1$ groups may optionally be substituted with one or more substituents which does not deleteriously affect the properties of the resulting coating. Such substituents include halogen atoms, hydroxyl groups, lower $C_1$-$C_6$ alkoxy groups, amino groups, nitro groups, and the like.

Illustrative of suitable difunctional acrylate ester monomers of formula I are those listed below in Table I.

TABLE I

1. $CH_2 = CHCOO\text{-}(CH_2)_{10}\text{-}OOCCH = CH_2$
2. $CH_2 = CHCOO\text{-}(CH_2)_6\text{-}OOCCH = CH_1$
3. $CH_2 = CHCOO\text{-}CH_2\text{-}CH_2\text{-}CH_2\text{-}C(C_2H_5)_2\text{-}CH_2\text{-}CH_2OOCCH = H_2$
4. $CH_2 = CHCOO\text{-}(CH_2)_{18}OCH_2\text{-}CH_2\text{-}OOCCH = CH_2$
5. $CH_2 = CHCOO\text{-}CH_2CH_2OCH_2CH_2OCH_2CH_2OCH_2CH_2\text{-}OOCCH = CH_2$

6. 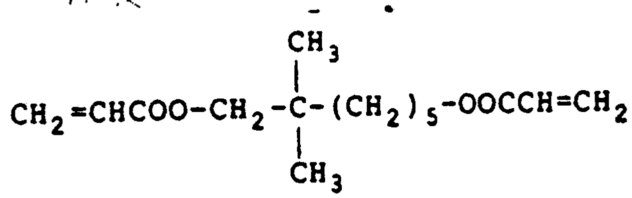

7. 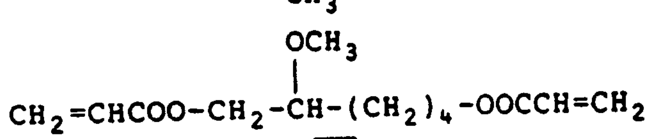

8. 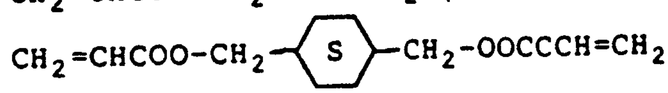

9. 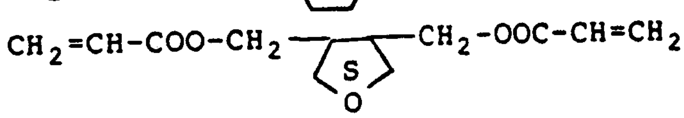

10. $CH_2=CHCOO-(CH_2)_4-OOC(CH_2)_4-COO-(CH_2)_4-OOCCH=CH_2$

These diacrylate esters and their production are well-known to those skilled in the art. One method of producing the diacrylate esters involves reacting acrylic acid with a dihydroxy compound to produce the diester. Thus, for example, acrylic acid can be reacted with hexanediol to produce hexanediol diacrylate (compound 2 in Table 1). The coating compositions may contain only one of said difunctional acrylate monomers or a mixture of one or more difunctional acrylate monomers.

The monofunctional acrylic monomers of the present invention are represented by the general formula

$R_2-CH=CH_2$

wherein $R_2$ is a lower alkoxycarbonyl group of from 1 to about 10 carbon atoms, lower cycloalkoxycarbonyl of from 1 to about 10 carbon atoms, lower heterocyclooxycarbonyl, of from 1 to about 10 carbon atoms, or nitrile.

Preferred monofunctional acrylic monomers are those wherein $R_2$ is lower alkoxycarbonyl of from 2 to about 6 carbon atoms, lower cyclalkoxycarbonyl of from 2 to about 6 carbon atoms, lower heterocyclooxycarbonyl of from 2 to about 6 carbon atoms or nitrile.

Any of the $R_2$ groups may optionally be substituted with one or more substituents, as described above in connection with the $R_1$ groups.

Examples of monofunctional acrylic monomers which may be used include methyl acrylate, ethylacrylate, butyl acrylate, cyclopropyl acrylate, tetrahydrofurfuryl acrylate, acrylonitrile and the like.

In the coating composition of the present invention the concentration of the difunctional acrylic monomer ranges from about 30% to about 100%, preferably from about 50% to about 100%, by weight of the total acrylic monomer content and the concentration of the monofunctional acrylic monomer generally ranges from about 0 to about 70%, preferably from about 0 to about 50% by weight of the total acrylic monomer content. The concentration of the monofunctional acrylic monomer is inversely related to the molecular weight of the difunctional acrylic monomer. The larger and more flexible the $R_1$ group, the less of the monofunctional acrylic monomer required. The concentration of the monofunctional acrylic monomer employed will also depend upon the cross-linked density, and thus thermoplasticity, desired in the cured coating. In general, when the average molecular weight of the $R_1$ group is less than about 200, the concentration of the monofunctional acrylic monomer is at least about 10%.

The photocurable coating compositions also contain a polymerization-initiating amount of a photoinitiator, i.e., an amount effective to initiate the polymerization of the coating composition. Generally, this amount is from about 0.01% to about 10% by weight, preferably from about 0.1% to about 5 % by weight of the coating composition. These additives and the cure thereof are generally well-known in the art. Some nonlimiting examples of these photoiniators include ketones, such as benzophenone, acetophenone, benzil, benzyl methyl ketone; benzoins and substituted benzoins such as benzoin methyl ether, α-hydroxymethylbenzoin isopropyl ether; halogen containing compounds such as α-bromoacetophenone, p-bromoacetophenone, α-chloromethylnaphthalene; and the like.

The coating compositions of the instant invention may also optionally contain various thickening agents, flatting agents, surface active agents, thixotropic agents, UV absorbers and dyes. All of these additives and the use thereof are well-known. Therefore, only a limited number will be referred to, it being understood that any compounds possessing the ability to function in such a manner, i.e., as a thickening agent, flatting agent, surface active agent, and the like, can be used so long as they do not deleteriously affect the polymerization of the coating compositions and do not adversely affect the nonopaque character of the coating.

One preferred thickening agent is cellulose acetate butyrate. Various surface-active agents, including anionic, cationic and nonionic surface-active agents are well-known and are described, for example, in Kirk-Othmer Encyclopedia of Chemical Technology, Vol. 19, Interscience Publishers, New York, 1969, pp.507-593, and Encyclopedia of Polymer Science and Technology, Vol. 13, Interscience Publishers, New York, 1970, pp. 477-486.

In preparing the composition of this invention, the components may be combined in any order. Typically, the coating compositions are first compounded by adding together the acrylic monomers, the UV photosensitizer and, optionally, any of the other aforementioned additives. Additionally, if so desired to reduce the viscosity of the coating formulation, an organic solvent, such as an alcohol, may optionally be incorporated into the formulation. Generally, the amount of solvent, if any, present should be such that evaporation of the solvent occurs before any deleterious effect on the substrate or the coating occurs. The various components advantageously are mixed so as to form a generally homogeneous coating composition. A thin, uniform coating of the composition is then applied onto the thermoplastic surface by any of the known means such as dipping, spraying, rollcoating and the like.

The coating may be cured by UV or electron beam irradiation using known techniques. Such curing is

advantageously conducted in an inert, e.g., nitrogen, atmosphere using UV irradiation, at a wavelength of from 1800 A. to 4000 A. The lamp systems used to generate such radiation are well-known and do not form a part of this invention. By curing is meant both polymerization of the acrylic monomers and cross-linking of the polymers to form hard, nontacky coatings.

To more fully and clearly illustrate the present invention, the following specific examples are presented. It is intended that the examples be considered as illustrative rather than limiting the invention disclosed and claimed herein. All parts unless otherwise indicated are by weight.

## Example 1

A coating composition is made by blending together 5 parts by weight of decanediol diacrylate and 0.1 parts by weight α,α-diethoxyacetophenone. A film of about 0.3 mils thickness of this coating composition is applied to one side of 1/8" thick panel of polycarbonate resin manufactured by General Electric Company using a No. 6 wire-wound drawdown bar.

The coated polycarbonate panel is then passed through a nitrogen-blanketed Linde photocuring apparatus (this consists of a variable speed conveyor running through a chamber containing medium pressure mercury vapor lamps which emit light mainly at 2537 A, 2652A, 2967A, 3022A, 3126A, and 3650A) wherein the nitrogen pressure is 25 psi nitrogen and the speed of the conveyor is 50 ft/min. After 1 pass the coating was hard and tack free.

The coated panel was then heated to 175°C and thermoformed around a 1-1/2 inch pipe mandrel. After thermoforming, this panel showed many fine cracks.

The test panel was also subjected to an abrasion test and an adhesion test. The abrasion test is one wherein test panels having a 1/4 inch diameter hole cut in the center were subjected to a Taber Abraser. The Taber Abraser was equipped with CS-10F wheels, which are resurfaced every 100 cycles by abrading for 25 cycles on a S-111 refacing disc. The weights used in combination with the CS-10F wheels are 500 gm. weights. Initial measurements of % Haze are made at four places around the wear track of the sample, using a Gardner Hazemeter. The sample was abraded for 100 cycles, cleaned with isopropanol, and the % Haze was remeasured at the same four places. The four differences in % Haze were calculated and averaged to give the Δ% Haze. The Δ% Haze of the uncoated sample is 34.

The scribed adhesion test consisted of using a multiple bladed tool to cut parallel grooves through the coating into the substrate, rotating the sample 90° and repeating the cutting process. This leaves a grid pattern of 1 mm squares cut into the coating. Scotch brand 810 Magic Transparent tape is applied over the crosshatched area and quickly pulled off. A sample fails the adhesion test if any of the squares are pulled off.

The results of these tests are set forth in Table 2.

## Example 2

The procedure of Example 1 was repeated in all essential details except that the coating mixture contained 4 parts by weight decanediol diacrylate, 1 part by weight methyl acrylate and 0.1 parts by weight diethoxyacetophenone.

After curing, the coating was hard and tack free. After thermoforming, the coated panel showed fewer cracks than the panel of Example 1.

The test panel was also subjected to an abrasion test and an adhesion test. The results of these tests are set forth in Table 2.

## Example 3

The procedure of Example 1 was repeated in all essential details, except that the coating mixture contained 3 parts by weight decanediol diacrylate, 2 parts by weight methyl acrylate and 0.1 parts by weight diethoxyacetophenone.

After curing, the coating was hard and tack free. After thermoforming, the coated panel showed fewer

cracks than the panel of Example 1.

The test panel was also subjected to an abrasion test and an adhesion test. The results of these tests are set forth in Table 2.

Example 4

The procedure of Example 1 was repeated in all essential details, except that the coating mixture contained 2 parts by weight decanediol diacrylate, 3 parts by weight methyl acrylate and 0.1 parts by weight diethoxyacetophenone.

After curing the coating was hard and tack free. After thermoforming, the coated panel showed no cracking.

The test panel was also subjected to an abrasion test and an adhesion test. The results of these tests are set forth in TABLE 2.

TABLE 2

| Sample | Taber Δ%Haze/100 cycles | Adhesion |
|---|---|---|
| Example 1 | 9.1 | Pass |
| Example 2 | 10.3 | Pass |
| Example 3 | 7.4 | Pass |
| Example 4 | 13.1 | Pass |

Example 5

The procedure of Example 1 was repeated in all essential details except that the coating mixture contained 4 parts by weight decanediol diacrylate, 1 part by weight isobornyl acrylate and 0.1 parts by weight diethoxyacetophenone.

After curing the coating was hard and tack free. The results after thermoforming are listed in Table 3.

Example 6

The procedure of Example 1 was repeated in all essential details except that the coating mixture contained 3 parts by weight decanediol diacrylate, 2 parts by weight isobornyl acrylate and 0.1 parts by weight diethoxyacetophenone.

After curing the coating was hard and tack free. The results after thermoforming are listed in Table 3.

Example 7

The procedure of Example 1 was repeated in all essential details except that the coating mixture contained 2 parts by weight decanediol diacrylate, 3 parts by weight isobornyl acrylate and 0.1 parts by weight diethoxyacetophenone.

After curing the coating was hard and tack free. The results after thermoforming are listed in Table 3.

Example 8

The procedure of Example 1 was repeated in all essential details except that the coating mixture contained 5 parts by weight hexanediol diacrylate and 0.1 parts by weight diethoxyacetophenone.

After curing the coating was hard and tack free.

Example 9

The procedure of Example 1 was repeated in all essential details except that the coating mixture contained 4 parts by weight hexanediol diacrylate, 1 part by weight isobornyl acrylate and 0.1 parts by weight diethoxyacetophenone.

After curing the coating was hard and tack free.

Example 10

The procedure of Example 1 was repeated in all essential details, except that the coating mixture contained 3 parts by weight hexanediol diacrylate, 2 parts by weight isobornyl acrylate and 0.1 parts by weight diethoxyacetophenone.

After curing the coating was hard and tack free.

Example 11

The procedure of Example 1 was repeated in all essential details, except that the coating mixture contained 2 parts by weight hexanediol diacrylate, 3 parts by weight isobornyl acrylate and 0.1 parts by weight diethoxyacetophenone.

After curing the coating was hard and tack free.

Example 12

The procedure of Example 1 was repeated in all essentials details, except that the coating mixture contained 4 parts by weight hexanediol diacrylate, 1 part by weight methyl acrylate and 0.1 parts by weight diethoxyacetophenone.

After curing the coating was hard and tack free. The results after thermoforming are listed in Table 3.

Example 13

The procedure of Example 1 was repeated in all essential details, except that the coating mixture contained 3 parts by weight hexanediol diacrylate, 2 parts by weight methyl acrylate and 0.1 parts by weight diethoxyacetophenone.

After curing the coating was hard and tack free. The results after thermoforming are listed in Table 3.

Example 14

The procedure of Example 1 was repeated in all essentials details except that the coating mixture contained 2 parts by weight hexanediol diacrylate, 3 parts by weight methyl acrylate and 0.1 parts by weight diethoxyacetophenone.

After curing the coating was hard and tack free. The results after thermoforming are listed in Table 3.

The test panel was also subjected to an abrasion test and an adhesion test. The panel passed the adhesion test and showed a Taber Δ%Haze/100 cycles of 17.8.

Table 3

| SAMPLE | THERMOFORMABILITY |
|---|---|
| Example 5 | Many cracks |
| Example 6 | Many cracks |
| Example 7 | Few cracks |
| Example 11 | Few cracks |
| Example 14 | No cracks |

## Example 15

The procedure of Example 1 was followed except that the coating mixture contained 2 parts by weight hexanediol diacrylate, 0.2 parts by weight cellulose acetate butyrate , 3 parts by weight methyl acrylate and 0.1 parts by weight diethoxyacetophenone.

After curing the coating was hard and tack free. The results after thermoforming are listed in Table 4.

The test panel was also subjected to an abrasion test and an adhesion test. The results of these tests are set forth in Table 5.

## Example 16

The procedure of Example 1 was followed except that the coating mixture contained 2 parts by weight hexanediol diacrylate and 0.2 parts by weight cellulose acetate butyrate, 3 parts by weight cyclohexyl acrylate, 0.1 parts by weight diethoxyacetophenone.

After curing the coating was hard and tack free. The results after thermoforming are listed in Table 4.

## Example 17

The procedure of Example 1 was followed except that the coating mixture contained 2 parts by weight hexanediol diacrylate, 0.2 parts by weight cellulose acetate butyrate , 3 parts by weight tetrahydrofurfuryl acrylate and 0.1 parts by weight diethoxyacetophenone.

After curing the coating was hard and tack free. The results after thermoforming are listed in Table 4.

The test panel was also subjected to an abrasion test and an adhesion test. The results of these tests are set forth in Table 5.

## Example 18

The procedure of example 1 was followed except that the coating mixture contained 2 parts by weight hexanediol diacrylate, 0.2 parts by weight cellulose acetate butyrate , 3 parts by weight ethyl acrylate and 0.1 parts by weight diethoxyacetophenone.

After curing the coating was hard and tack free. The results after thermoforming are listed in Table 4.

The test panel was also subjected to an abrasion test and an adhesion test. The results of these tests are set forth in Table 5.

## Example 19

The procedure of example 1 was repeated in all essential details except that the coating mixture contained 2 parts by weight hexanediol diacrylate, 0.2 parts by weight cellulose acetate butyrate , 5 parts by weight of a diacrylate of polyethyleneglycol 200, obtained from ARCO Chemical Company under the trademark Sartomer 259, and 0.1 parts by weight diethoxyacetophenone.

After curing the coating was hard and tack free. The results after thermoforming are listed in Table 4.

## Example 20

The procedure of example 1 was followed except that the coating mixture contained 2 parts by weight hexanediol diacrylate, 0.2 parts by weight cellulose acetate butyrate , 5 parts by weight of a diacrylate of polyethyleneglycol 400, obtained from ARCO Chemical Company under the trademark, Sartomer 344 and 0.1 parts by weight diethoxyacetophenone.

After curing the coating was hard and tack free. The results after thermoforming are listed in Table 4.

The test panel was also subjected to an abrasion test and an adhesion test. The results of these tests are set forth in Table 5.

## Example 21

The procedure of example 1 was followed except that the coating mixture contained 2 parts by weight hexanediol diacrylate, 0.2 parts by weight cellulose acetate butyrate , 5 parts by weight of a diacrylate of a high molecular weight polyethyleneglycol obtained from ARCO Chemical Company under the trademark, Sartomer C-2000 and 0.1 parts by weight diethoxyacetophenone.

After curing the coating was hard and tack free. The results after thermoforming are listed in Table

TABLE 4

| SAMPLE | THERMOFORMABILITY |
|---|---|
| Example 15 | No cracks |
| Example 16 | Many cracks, extend halfway |
| Example 17 | No cracks |
| Example 18 | No cracks |
| Example 19 | Many cracks, extend full length |
| Example 20 | No cracks |
| Example 21 | Many cracks, extend full length |

TABLE 5

| Sample | Taber Δ%Haze/100 cycles | Adhesion |
|---|---|---|
| Example 15 | 26.6 | Pass |
| Example 17 | 16.6 | Pass |
| Example 18 | 24.0 | Pass |
| Example 20 | 35.8 | Pass |

## Claims

1. A coating composition for thermoplastic substrates, which is UV-curable and which produces thermoformable coatings, comprising:

(a) a difunctional acrylic monomer of the formula

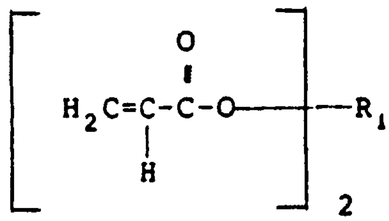

wherein $R_1$ is a divalent radical selected from the group consisting of straight or branched alkylenes containing from 6 to about 30 carbon atoms, provided that, if the alkylene group is branched, at least about 6 carbon atoms are in the chain separating the acrylate groups; poly(lower alkylene ether)s, wherein the alkylene groups contain from 2 to about 6 carbon atoms and the molecular weight of the poly(lower alkylene ether) ranges from about 100 to about 500; polyesters derived from lower alkylene diols of from 2 to about 6 carbon atoms and lower alkylenedicarboxylic acids of from 2 to about 10 carbon atoms, said polyesters having molecular weights from about 50 to about 500; and monocyclic, polycyclic and heterocyclic saturated ring systems of from 6 to about 30 carbon atoms;

(b) a monofunctional acrylic monomer of the formula

$R_2\text{-}CH=CH_2$

wherein $R_2$ is a lower alkoxycarbonyl group of from 1 to about 10 carbon atoms; lower cycloalkoxycarbonyl of from 1 to about 10 carbon atoms; lower hetercyclooxycarbonyl of from 1 to about 10 carbon atoms; or nitrile; and

(c) a polymerization-initiating amount of a photoinitiator; wherein the concentration of the difunctional acrylic monomer ranges from about 30% to about 100% by weight of the total acrylic monomer content and the concentration of the monofunctional acrylic monomer ranges from about 0 to about 70% by weight of the total acrylic monomer content; provided that the concentration of the monofunctional acrylic monomer is at least about 10% when the molecular weight of the $R_1$ group is less than about 200.

2. The composition of claim 1, wherein $R_1$ is a straight or branched alkylene group containing from 10 to about 20 carbon atoms; a poly(lower alkylene ether), wherein the alkylene groups contain from about 4 to about 6 carbon atom and the molecular weight of the poly(lower alkylene ether) ranges from about 100 to about 300; a polyester derived from lower alkylene diols of from about 4 to about 6 carbon atoms and lower alkylenedicarboxylic acids of from 4 to about 6 carbon atoms and lower alkylenediacarboxylic acids of from 4 to about 6 carbon atoms, said polyester having a molecular weight of from about 100 to about 300; and monocyclic, polycyclic and heterocyclic saturated ring systems containing from about 10 to about 20 carbon atoms, wherein any of the above-described $R_1$ groups may optionally be substituted with one or more halogen atoms, hydroxyl groups, lower $C_1$-$C_6$ alkoxy groups, amino groups, or nitro groups.

3. The composition of claim 2, wherein $R_2$ is lower alkoxycarbonyl of from 2 to about 6 carbon atoms, lower cycloalkoxycarbonyl of from 2 to about 6 carbon atoms, lower heterocycloxycarbonyl of from 2 to about 6 carbon atoms or nitrile, wherein any of the $R_2$ group may optionally be substituted with one or more halogen atoms, hydroxyl groups, lower $C_1$-$C_6$ alkoxy groups, amino groups or nitro groups.

4. The composition of claim 3 wherein the concentration of said difunctional acrylic monomer is between about 50% and 100% by weight and the concentration of said monoacrylic monomer is between about 0% to about 50% by wt., based on the total acrylic monomer content.

5. The composition of claim 4 wherein said diacrylic monomer is decanediol diacrylate.

6. The composition of claim 4 wherein said diacrylic monomer is hexanediol diacrylate.

7. The composition of claim 4 wherein said diacrylic monomer is polyethylene glycol diacrylate.

8. The composition of claim 4 wherein said diacrylic monomer is a mixture of hexanediol diacrylate and polyethyleneglycol 400 diacrylate.

9. The composition of claim 4 wherein said monofunctional acrylic monomer is methyl acrylate

10. The composition of claim 4 wherein said monofunctional acrylic monomer is tetrahydrofurfuryl acrylate.

11. The composition of claim 4 wherein said monofunctional acrylic monomer is ethyl acrylate.

12. A thermoplastic article coated with a cured coating composition as defined in claim 1, 2, 3 or 4.

13. A process for coating a thermoplastic article, which comprises applying a thin coating of a composition as defined in claim 1, 2, 3 or 4 to the article and irradiating the coating with polymerizing radiation to form a non-tacky coating.

14. The process of claim 13, wherein the coating is applied by dipping, spraying or rollcoating.

15. The process of claim 13, wherein the polymerizing radiation is UV radiation at a wavelength of from about 1800A to about 4000A.

European Patent Office

# EUROPEAN SEARCH REPORT

Application Number

EP 89 10 4233

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | US-A-4 198 465 (J.E. MOORE et al.)<br>* Examples 2-9,15,20; table IV; claims * | 1-4,12-15 | C 09 D 133/04<br>C 08 J 7/04<br>C 08 J 7/18 |
| A | EP-A-0 073 413 (BASF AG)<br>* Example 3 * | 1 | |
| | | | **TECHNICAL FIELDS SEARCHED (Int. Cl.5)** |
| | | | C 08 F<br>C 09 D<br>C 08 L |

The present search report has been drawn up for all claims

| Place of search | Date of completion of the search | Examiner |
|---|---|---|
| THE HAGUE | 15-11-1989 | GLIKMAN J-F.M. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)